Europäisches Patentamt

European Patent Office

Office européen des brevets

(19)

(11) Publication number : **0 631 372 A1**

(12) **EUROPEAN PATENT APPLICATION**

(21) Application number : **94304563.3**

(22) Date of filing : **23.06.94**

(51) Int. Cl.$^5$ : **H02M 5/293, H02M 3/158**

(30) Priority : **24.06.93 GB 9313098**

(43) Date of publication of application :
**28.12.94 Bulletin 94/52**

(84) Designated Contracting States :
**BE DE FR SE**

(71) Applicant : **STRAND LIGHTING LIMITED**
**Grant Way (Off Syon Lane)**
**Isleworth Middlesex TW7 5QD (GB)**

(72) Inventor : **Skinner, Andrew John, ERA**
**Technology Limited**
**Cleeve Road**
**Leatherhead, Surrey KT22 7SA (GB)**

(74) Representative : **Beresford, Keith Denis Lewis**
**BERESFORD & Co.**
**2-5 Warwick Court**
**High Holborn**
**London WC1R 5DJ (GB)**

(54) **Power control circuit.**

(57)    The invention concerns a resonant power
control circuit particularly for lighting which is
capable of operating either in a "Buck" mode
in which the output voltage is lower than the
input voltage or a "Boost" mode in which the
output voltage is higher than the input voltage.

FIG. 10

This invention relates to a power control circuit which is particularly, though not exclusively, suited to use in light dimming systems. Such systems can be used in theatres and television or film studios.

Television and film studios require high power light sources (often mobile) for selective illumination of particular characters, as do live entertainment venues such as theatres. It is necessary to be able to control the level of illumination, both to provide a constant predetermined level and for providing fade-in and fade-out effects. The control circuit for controlling the level of illumination is known as the "dimmer".

In the past, dimmers using autotransformers, that is transformers with a sweep connector to vary the number of turns on the secondary coil, have been used. Typically, the AC mains supply would be connected to the primary coils of a bank of such transformers, each secondary coil being individually connected to a separate light. However, each transformer occupied considerable space and was cumbersome to use.

Alternative dimmer structures used variable resistors (rheostats) which are smaller, but these generate considerable heat because of the high current through the resistance of the coils. A bank of such rheostats therefore generated a large amount of heat, leading to the need for cooling, and to potential mechanical reliability problems.

In recent years, it has become known to use phase control as a method of controlling AC power. In phase control systems, a semiconductor switch switches the AC supply voltage on once each half-cycle. By controlling the timing at which the semiconductor element switches on, the proportion of the mains cycle gated through the semiconductor element, and hence the average power of the output, is controlled. The components of the phase control dimmer are relatively cheap, and do not involve mechanical movement. Further, the phase controlled dimmer is controllable from a low voltage source such as the output of a micro-computer, making it possible to digitally control the light level. Phase control dimmers have found application in power control in general, and in most lighting control applications. However, major problems arise in some applications. Because the semiconductor switch gates the AC mains supply voltage in a series of sharp steps, much of the power in the output is contained in harmonics of the mains frequency. The magnitude of the harmonics varies with the time of switching of the semiconductor switch (and hence the level of light) and the rate of rise of current flow (or the switching speed). The harmonics manifest themselves in two undesirable effects.

Firstly, electromagnetic interference is generated across a broad spectrum. Higher frequency components will be radiated outwardly of the dimmer and the load circuit, and could interfere with other electrical equipment nearby.

Secondly, where the lamp is an incandescent filament lamp, magnetomotive forces within the filament are caused, generating mechanical vibrations at harmonics of the mains frequency, and these mechanical vibrations are audible as "lamp sing"; they can also reduce the life of the filament.

Several approaches to reducing the magnitude of these effects have been proposed. In US 3691404 and 4287468, and in a product marketed by Colortran, a dimmer is provided in which the AC cycle is switched once each cycle, rather than once each half-cycle. This reduces the magnitude of such effects, although it does not eliminate them. However, it leads inevitably to the introduction of a DC component in the output current, and can lead to the superstition of a DC voltage back onto the mains supply, which is unacceptable in many applications. Usually the rate of change in current flow is controlled by connection of a series inductor within the load circuit.

Another solution to the problem of a controllable power supply was suggested in an article entitled "Single-cycle resonant converters: A new group of quasi-resonant converters suitable for high performance ac/dc and ac/ac conversion applications" in IEEE Transactions on Industrial Electronics, Vol. 38, No. 4, August 1991, pages 260-267 by Cho J.G., and Cho G.H.

This article describes the converter being operated in a mode in which the output voltage is lower than the input voltage. This mode of operation will hereinafter be referred to as "Buck-mode". In many applications, and in particular for controlling lighting, a limitation to use only in the buck-mode has disadvantages. In particular it is not possible to compensate for series losses and thus to obtain a genuine 0-100% output range at the load.

The present invention is directed to meeting this problem.

Other aspects of the invention are as described or claimed hereafter.

The invention will now be described, by way of example only, with reference to the accompanying drawings, in which:

Figure 1 shows a dimmer rack for a plurality of light sources;

Figure 2 is a diagram showing the basic configuration of a power converter circuit which can be used in the dimmer rack of Figure 1;

Figures 3 to 6 illustrate stages in the operation of the converter circuit of Figure 2.

Figure 7 shows a waveform across a capacitor in the circuit of Figure 5;

Figures 8 and 9 show further waveforms;

Figure 10 is a circuit diagram of a practical bi-directional converter;

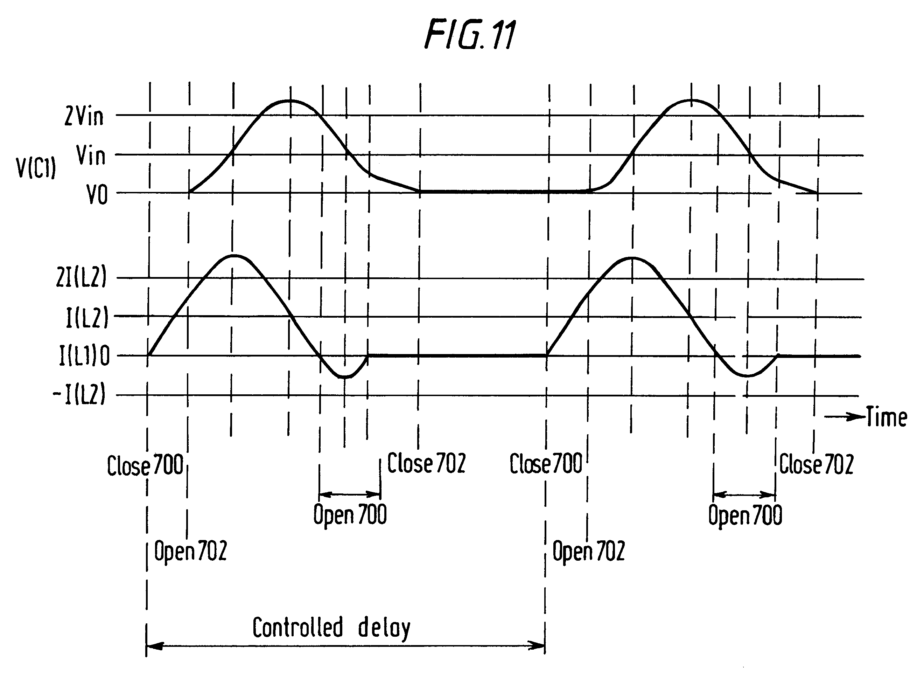

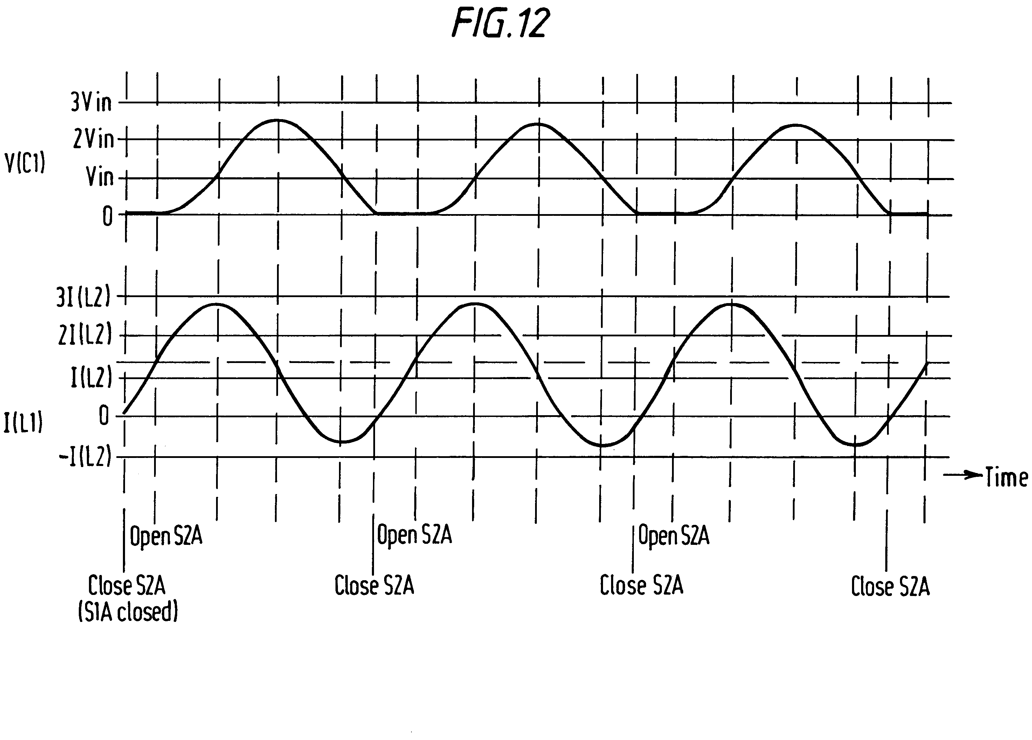

Figures 11 to 16 show additional operational waveforms;

Figure 17 shows a second embodiment of a converter; and

Figure 18 shows a third embodiment.

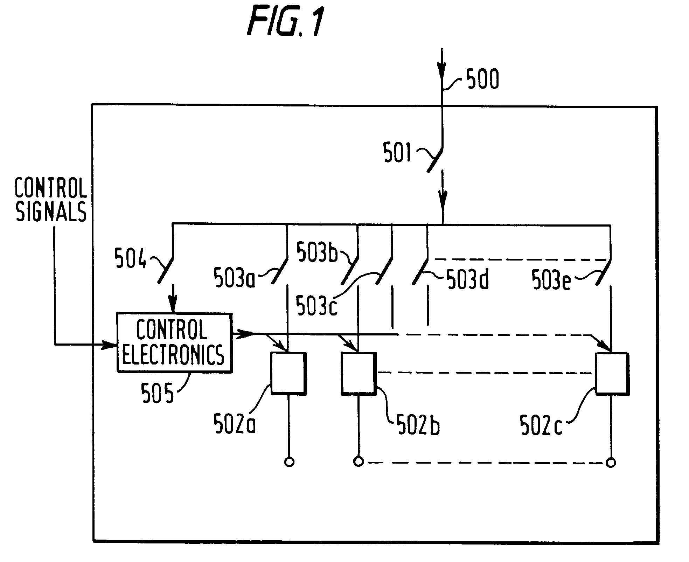

Referring to Figure 1, this shows a dimmer rack for controlling a number of light sources in, for example, a studio environment. Thus the dimmer rack of Figure 1 comprises a mains supply point 500, preferably a primary isolation circuit breaker 501, a plurality of dimmer circuits 502a-502c connected to the primary isolation point 501 via individual secondary circuit control breakers 503a-503e, and a control circuit 505 connected to the control cable from a control desk (not shown). Each dimmer circuit will be connected in use to a light source.

The control signals from the control desk may comprise digital words, for example transmitted as a series of bits, each word representing the intensity level for a given dimmer, the dimmer intensity levels being transmitted in time division multiplex form and the control electronics 505 may comprise a demultiplexer arranged to separate the signals and transmit a respective dimmer control word to each dimmer 502a-502c in serial form, parallel form or any other convenient form (for example as an analogue voltage).

The control unit 505 is likewise isolated via a secondary circuit breaker 504; the control electronics 505 may be provided as a suitably programmed microprocessor for example.

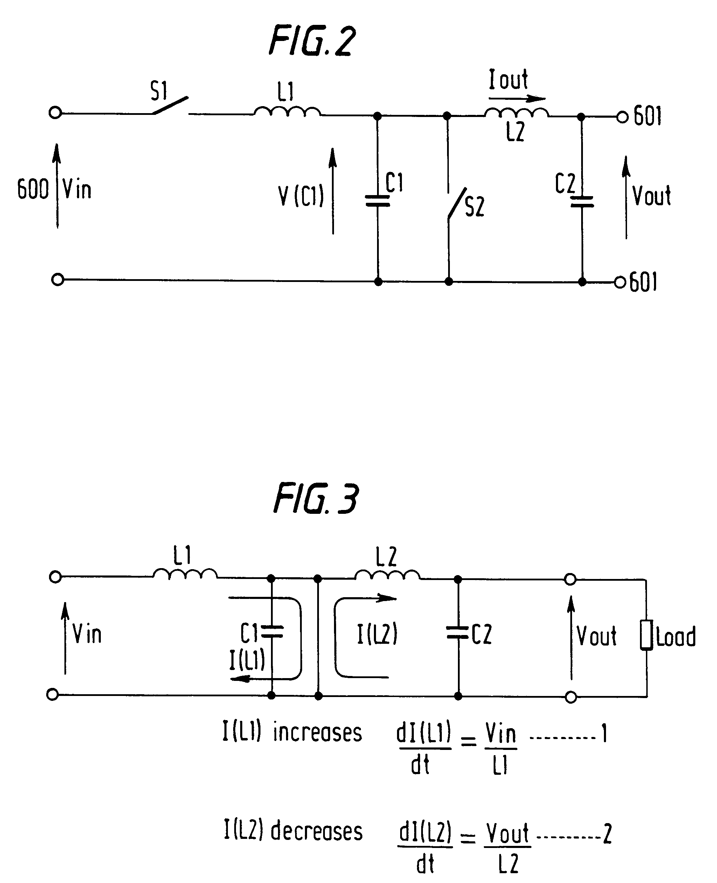

Referring now to Figure 2 of the accompanying drawings, this shows the basic components of the resonant converter with which the present invention is concerned. Practical versions of such circuits are intended to provide the dimmer circuits previously described. In the circuit of Figure 2 a voltage supply is indicated at 600 and switches S1 and S2 are controlled uni-directional (ac) switches and a load such as a lamp (not shown) will be connected across terminals 601. Energy is passed from the supply 600 to the load terminals 601 by closing switch S1. Closure of S1 initiates an event driven sequence in which switching losses in the converter are limited by allowing switch S2 to switch only when the voltage across a capacitor C1 is approximately zero and allowing switch S1 to open only when the current in an inductor L1 is approximately zero.

The operation of the converter shown in Figure 2 can be broken down into three phases. The operation is described on the assumption that the load is relatively heavy.

The first is the pre-charge phase shown in Figure 3. In this phase switch S1 is closed and switch S2 remains closed and the converter operates in a pre-charge phase with current increasing in inductor L1 and decreasing in inductor L2. This is shown in equations 1 and 2.

$$I(L1) \text{ increases } \frac{dI(L1)}{dt} = \frac{Vin}{L1} \quad 1$$

$$I(L2) \text{ decreases } \frac{dI(L2)}{dt} = \frac{Vout}{L2} \quad 2$$

The inductors L1 and L2 are sized so that the rate of change of current is approximately constant during this phase.

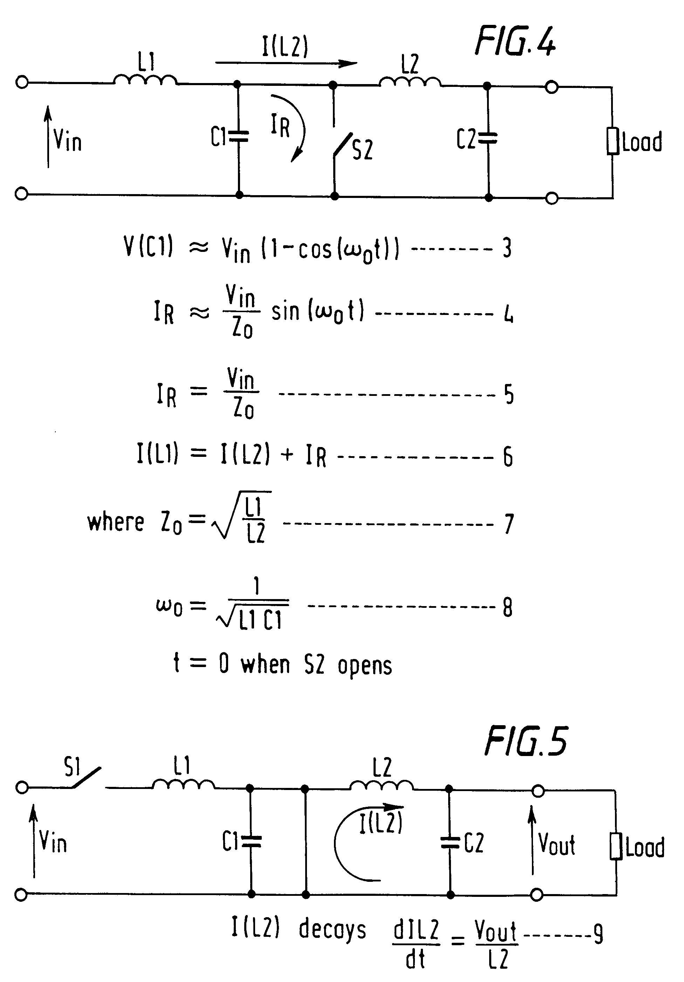

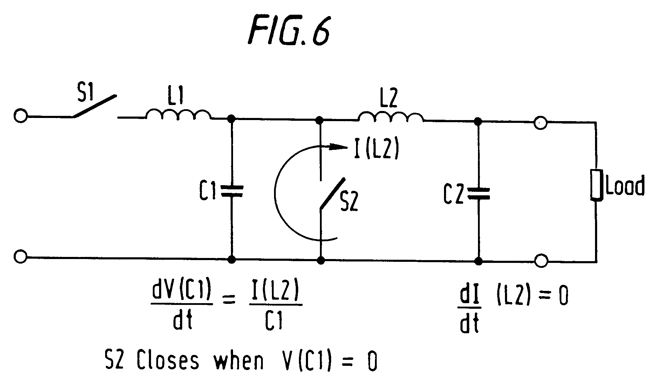

In the second phase switch S2 is opened. With ideal components this opening would occur when the current in inductor L1 equals that in inductor L2. However in a practical converter the pre-charge phase illustrated in Figure 6 is used to store extra energy in inductor L1 to overcome circuit losses. When switch S2 is opened the converter operates in the resonant mode and this is the phase illustrated in Figure 4. In this phase energy is transferred from inductor L1 to capacitor C1 and produces an offset sinusoidal voltage across capacitor C1 in which the offset is approximately constant for the duration of the resonant phase and is equal to the supply voltage. This is on the assumption that the operating frequency of the converter is significantly higher than the supply frequency. Operation in this phase is shown in equations 3 to 8.

$$V(C1) \approx V_{in}(1 - \cos(\omega_o t)) \quad 3$$

$$I_R \approx \frac{V_{in}}{Z_o} \sin(\omega_o t) \quad 4$$

$$I_R = \frac{V_{in}}{Z_o} \quad 5$$

$$I(L1) = I(L2) + I_R \quad 6$$

$$\text{where } Z_o = \sqrt{\frac{L1}{L2}} \quad 7$$

$$\omega_o = \frac{1}{\sqrt{L1\,C1}} \quad 8$$

$$t = 0 \text{ when S2 opens}$$

The last phase is a freewheel phase which is illustrated in Figure 5. This figure shows switch S1 as open and switch S2 closed. In this configuration switch S2 clamps the voltage applied to the inductor L2 and capacitor C2 to zero. The latter inductor and capacitor act as an output filter. The relationship between the decay across L2 and the output voltage is shown in equation 9.

$$I(L2) \text{ decays } \frac{dIL2}{dt} = \frac{Vout}{L2} \quad 9$$

After a complete resonant cycle the resonant current 1R in inductor L2 and the voltage across capacitor C1 return to zero at which point switch S2 is closed. If the current in inductor L2 is less than the peak resonant current 1R then a source load dependent time before switch S2 is closed the current in inductor L1 falls to zero. If, as shown in Figure 6, switch S1 is now opened the final discharge of capacitor C1 is no longer sinusoidal but is approximately linear, since it is discharged by inductor L2. When switch S2 is closed and switch S1 is open the converter is again in the freewheel phase shown in Figure 6 and the generating sequence is complete.

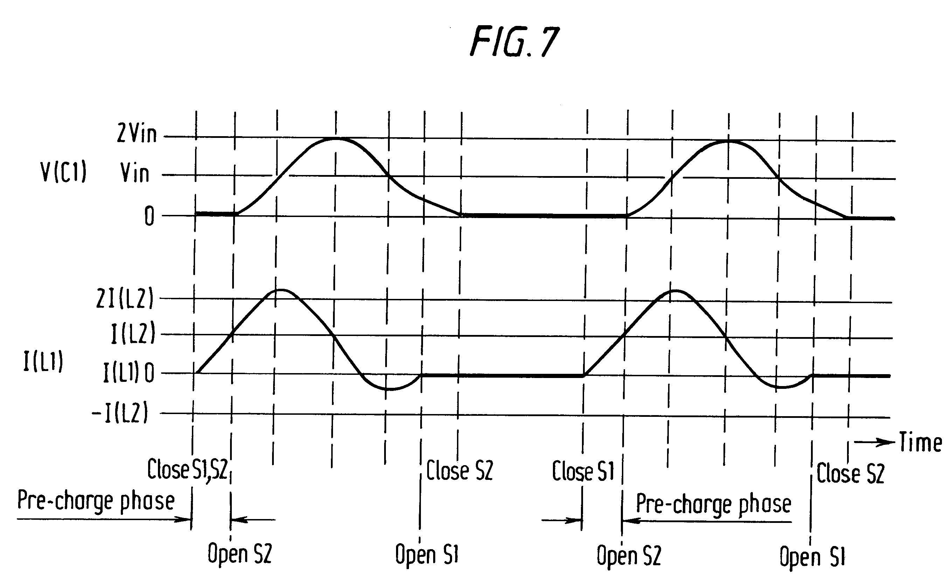

Figure 7 of the drawings shows typical waveforms of several cycles of the converter in the buck-mode. As has been described in this mode the voltage across capacitor C1 is integrated by the output filter formed by inductor L2 and capacitor C2 to produce an output voltage. When switch S1 is closed the voltage across capacitor C1 is an offset sinusoid with an average value equal to the supply voltage. In this buck-mode of operation the output voltage is controlled by varying the delay between the initiation of each resonant cycle.

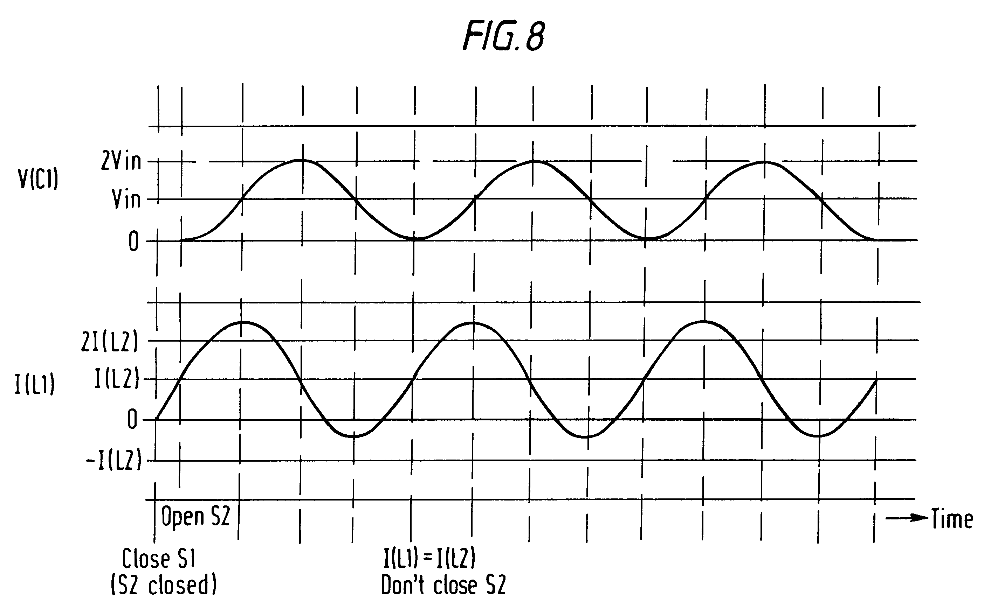

In a simple resonant mode of operation switch S1 is held closed and the output voltage is equal, in an ideal circuit, to the input voltage. Waveforms illustrating this mode of operation are shown in Figure 8.

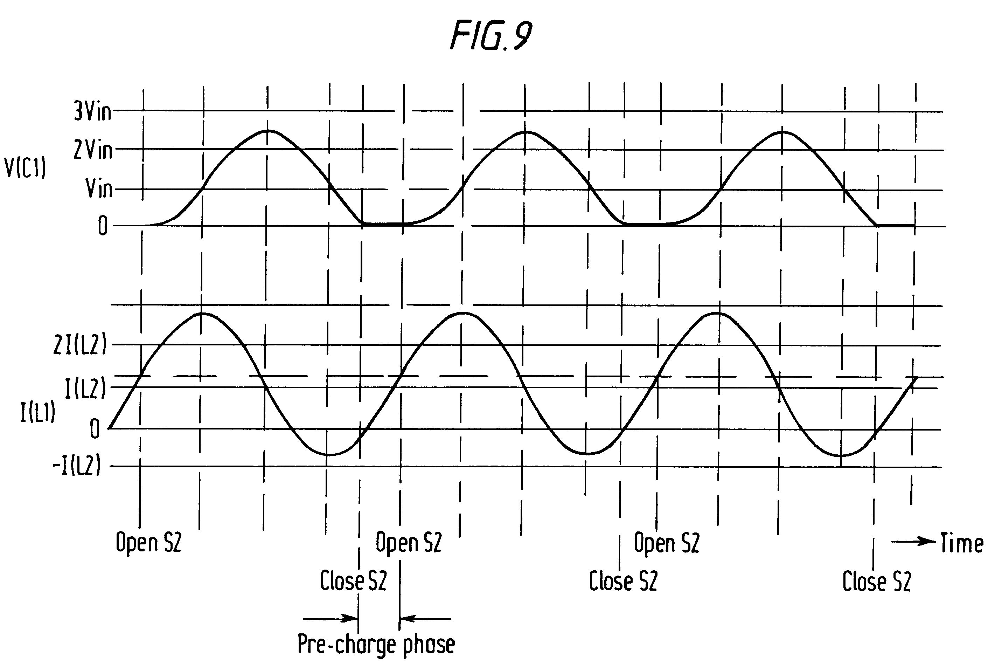

Figure 9 shows the waveforms when inductor L1 has been pre-charged in the pre-charge phase to a current greater than that in inductor L2. It will be seen that the output voltage remains equal to the supply voltage and that the excess energy stored in inductor L1 is removed after switch S2 is closed.

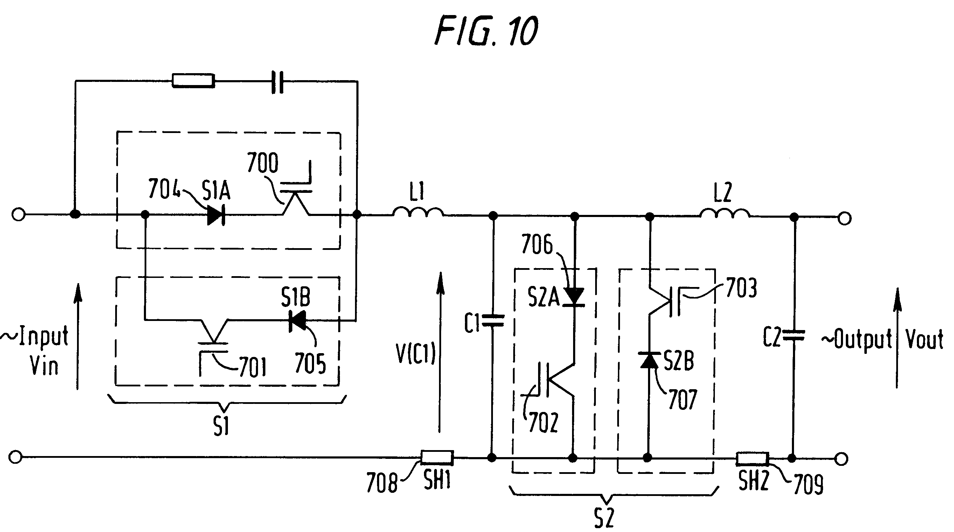

Figure 10 shows an actual converter which uses respective pairs of transistor switches 700, 701, 702, 703 and associated diodes 704, 705, 706 and 707 in the place of switches S1 and S2 to provide bi-directional switching.

Thus whilst the description of the operation of the converter of Figure 2 was limited to one half of an AC supply it will be appreciated that the converter of Figure 10 can operate on a full AC supply.

The use of bi-directional switches requires that the instants of switching have to be detected and control signals generated within time periods which are small when compared to the resonant period. Thus 708 and 709 are high bandwidths current shunt devices which enable the currents in inductors L1 and L2 to be sensed using ground referenced sensors. The diodes associated with the switches only conduct when the associated transistor switch is closed.

When the circuit of Figure 10 operates in the already described mode transistor switches 700 and 702 are held closed for a positive supply and transistors 701 and 703 are used to control the converter. Obviously the converse will apply when the supply goes negative. As in the description given with regard to the circuit of Figure 2, the pre-charge phase is used to precharge inductor L1 to a current greater than that in inductor L2. The excess energy stored in inductor L1 is used to offset circuit losses and to ensure that the voltage across capacitor C1 will return to zero in approximately one cycle of the resonant circuit formed by inductor L1 and capacitor C1.

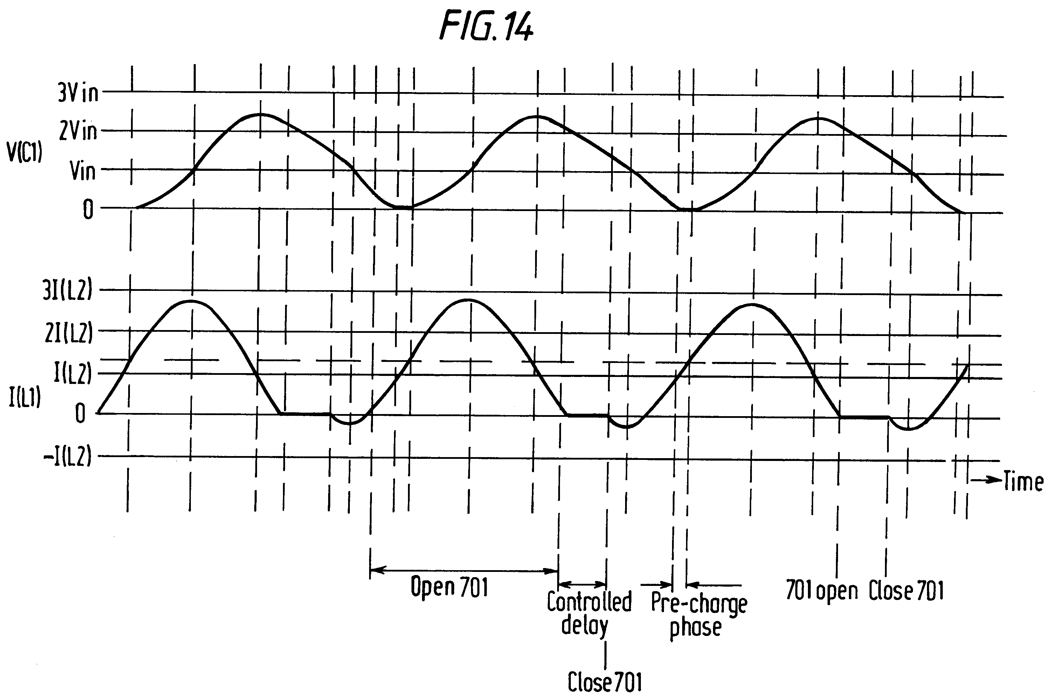

Considering the case for a positive supply. The pre-charge phase begins when switch 700 is closed, the peak voltage across switches 702 and 703 exceeds the ideal value of twice the supply voltage due to the excess energy stored in inductor L1. The condition for completing the timing sequence in the buck-mode is that 700 is opened when the current in L1 is zero. Examination of the waveforms shown in Fig. 14 shows that the current in L1 is negative for a significant part of the resonant cycle. During this time current is flowing in 701, and 700 can be opened at any time after the direction of current in L1 reverses. The duration of the negative current in L1 must exceed the propagation delays of the control circuit and power switch so that the current in L1 is either negative or zero when 700 opens. The signal used to close 102 must be generated after switch 103 has clamped the voltage across capacitor C1 to approximately zero volts, and before the current in inductor L2 reverses. The delay between the initiation of each resonant cycle by opening 700 is used to control the converter in the buck-mode. The delay is ideally timed from the instant where the previous resonant cycle was initiated as shown in Fig. 14. The command to close 700 can therefore be generated before the command to open 700, this preventing unnecessary switching of 700 when operating in the resonant-mode.

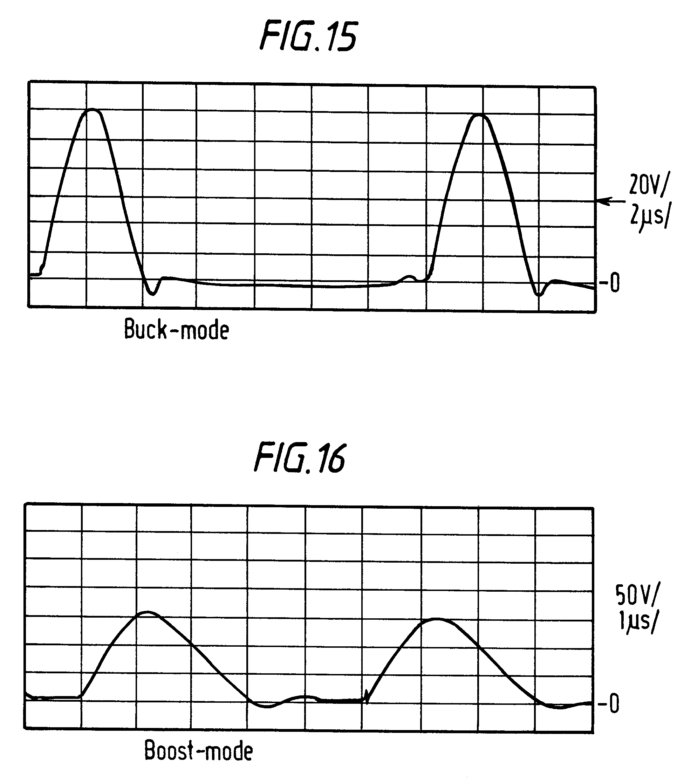

Figure 15 shows typical waveforms in the resonant-mode for a positive supply. In this mode all switches are held closed with the exception of 702 if the supply is positive and 703 if the supply is negative. It can be seen from Fig. 15 that the converter enters the pre-charge phase once each cycle, the energy stored in L1 is used to guarantee that the voltage across capacitor C1 returns to zero in approximately one period of the resonant circuit formed by L1 and C1.

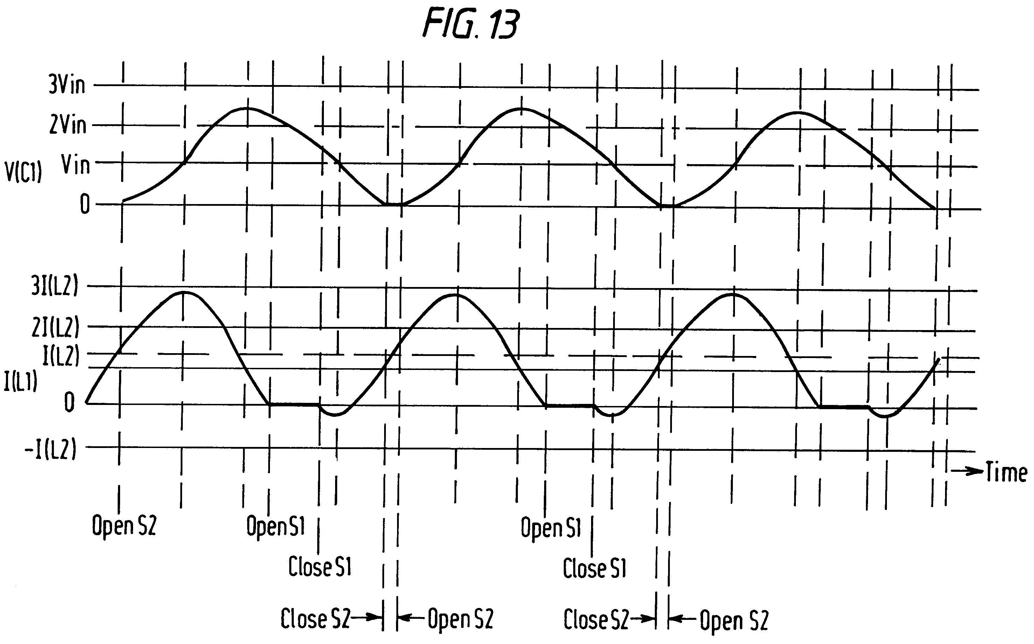

As already mentioned in the buck-mode of operation which has been described both in relation to an idealised circuit in Figure 5 and the practical circuit in Figure 13 the output voltage can never exceed the supply voltage and this can be a disadvantage, particularly where the converter is used for dimming lights.

It has been discovered that this disadvantage can be overcome by running the converter which has been just described in what is known as "boost" mode.

In order to operate the converter in the boost mode it is necessary to alter the switching pattern.

Consider again the circuit shown in Figure 5. If the converter is operating with L1 pre-charged to greater than the current in L2 and S1 is opened when the current in L1 falls to zero from the positive side (for a positive supply) as is shown in Figure 16 then C1 is discharged at approximately a constant rate by inductance L2. If S1 is then reclosed the peak negative current in inductance L1 is reduced compared to that in the resonant mode. The result of this is that the pre-charge phase is shortened and the average voltage across capacitor C1 is greater than that in the resonant mode. This mode of operation is defined as the boost-mode of the converter and the output voltage is greater than the input voltage. The amount of voltage boost obtained is controlled by varying the amount by which L1 is pre-charged and by varying the time for which S1 is opened.

The above description assumes a positive supply, it can be seen that the same conditions will apply for a negative supply voltage and that the polarity of the current in L2 will not prevent the converter operating in the three modes described. Hence the converter may be used with non-resistive loads. The control conditions applied to the three modes enables the converter to change between modes at any time.

Considering now the embodiment shown in Figure 13 for boost mode operation switches 700 and 703 are held closed for a positive supply and switches 701 and 702 are held closed for a negative supply. Switch 701 is opened before the current in inductance L1 reverses. It is important that the signal used to control switch 701 must be generated earlier in the cycle than required to overcome circuit propogation delays which would otherwise lead to discontinuation in the transfer function of the converter which would lead to control difficulties. In fact the signal to control switch 701 can be generated any time after the current in inductance L1 goes positive.

To prevent discontinuities switch 701 must be opened sufficiently early in the resonant cycle so that it may be reclosed at the instant current in inductance L1 falls to zero, or after a controlled delay from this instant. This may be achieved by timing the delay from the point where the current in inductance L1 goes positive. Reclosing switch 701 with positive current in inductance L1 has the same effect as reclosing it exactly at the point in the cycle where the current in inductance L1 falls to zero. The latest point in the cycle where switch 701 may be reclosed is load dependent, this gives a maximum load dependent delay for which switch 701 may be open. Oscillation will cease if switch 701 is closed too late in the cycle. The signal to reclose switch 701 must also be generated earlier than required to compensate for circuit propogation delays.

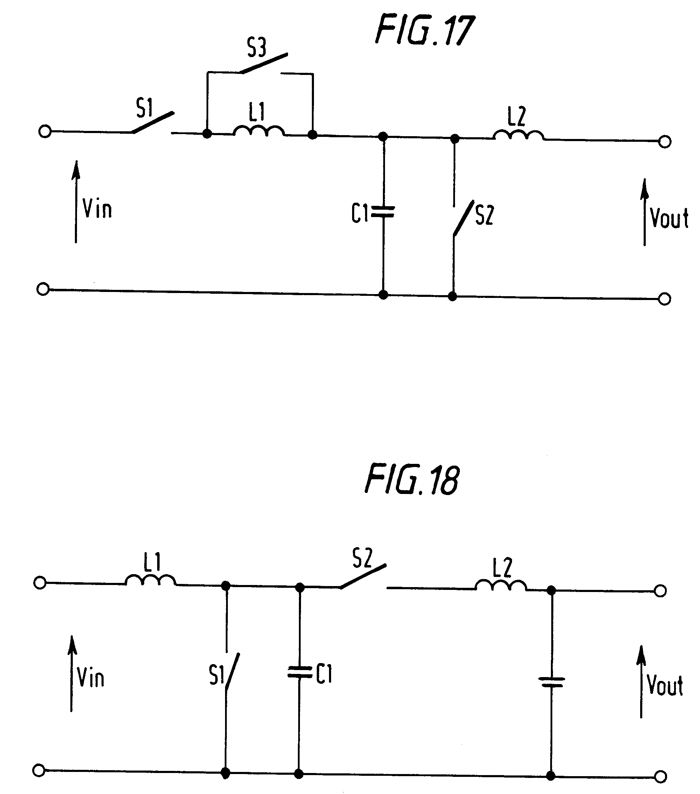

The difference between operation in the already known Buck-mode and in Boost mode can be appreciated from a comparison of the waveforms of Figures 14 and 17. From these figures it can be seen that the pre-charge phase in the boost mode has been shortened when compared to the Buck mode. Additionally the charge in capacitor C1 whilst tracking zero no longer has relatively extended periods at zero volts. The earlier closing of switch 701 has caused energy to be retained in the resonant circuit with the result that the pre-charge period is shortened and the final voltage maintained at a level above the input voltage. Figure 19 also shows how in the boost mode the voltage across capacitor C1 is both distorted and has a higher peak than the similar voltage in the Buck mode.

It will be appreciated that the circuit shown in Figure 13 is essentially symmetrical so that whenever in the following claims reference is made to a positive power supply and subsequent voltage or current values in the circuit the terminology is equally applicable to the converse situation of a negative power supply.

Referring now to Figure 17 of the drawings, this shows a converter which uses the resonant action between inductor L1 and capacitor C1 to provide soft switching. Switch S1 is switched at zero current, switches S2 and S3 are switched at zero voltage.

To understand the operation of this circuit it is best to consider the dc case. In the freewheel state the current in the 'large' inductor L2 passes through switch S2 which is closed. A resonant cycle is initiated by closing switch S1. When switch S2 is opened the resonance between L1 and C1 causes the voltage across C1 to rise. When the voltage across C1 equals the input voltage switch S3 closes, inhibiting the resonant action and clamping the voltage on C1 at the input voltage. The current in L1 is assumed to remain constant during this period. At the end of the required conduction period switch S3 is opened and the resonance between L1 and C1 is completed, switch S1 is opened at zero current. When the voltage across C1 reaches zero switch S2 is closed and the converter is in the freewheel state.

This topology may also be operated in the resonant and boost modes of the resonant buck topology. In the buck and boost modes switch S1 is only used during the switching transitions, this switch has a low duty cycle but must pass comparable current to switches S2 and S3. This is not efficient use of the additional semiconductor material required for this topology compared to the resonant buck topology. The additional cost in terms of semiconductors may be justified if fixed-frequency operation is desirable.

This would occur where a large duty-cycle range is required, the resonant buck topology would require an operating frequency range equal to the duty-cycle range which would result in problems with the emc filter at lower frequencies. In this application where the minimum required duty-cycle is 12.5%, a frequency range of 8:1 is required for the resonant buck converter. Operation at a fixed frequency using the extended pulse resonant buck converter would result in a smaller emc filter than is required for the variable frequency converter, this would offset some of the additional cost and would result in a physically smaller unit. A converter of this type could typically operate at half the frequency of the resonant buck topology and utilise the same size of filter. The full power efficiency of the extended pulse resonant buck converter would be approximately 95% using IGBT devices.

Referring now to Figure 18 this converter is capable of operating as a buck or boost stage. A resonant waveform across capacitor C1 and inductor L1 is maintained by using switch S1 to pre-charge L1 once each cycle to overcome losses. S1 is operated in a zero-voltage switching mode. Switch S2 is operated in a zero current switching mode and is used to provide phase control of the high frequency voltage waveform. The phase controlled waveform is then applied to the output filter in the form of current pulses, due to the action of inductor L2.

This topology uses one mode of operation to produce either a buck or boost operation voltage. This simplifies the control circuit relative to that required for the resonant buck topology. This topology has high levels of circulating current in both the input and output filters, this results in this circuit being less efficient than the resonant buck topology. A full power efficiency of approximately 93% is probable.

When operating from a 120 V supply the line current is increased by a factor of two. The semiconductor switches may pass greater than 50 A in the resonant topologies. The peak supply voltage is 170 V, this allows 400/500 V technologies to be used in the resonant circuits and 200/300 V devices to be used where the voltage stress is equal to the line voltage.

At 200-300 volts power MOSFET devices are available with current ratings to 50 A, but at 400/500 volts power MOSFETs are limited to approximately 20 A in a single die. This makes power MOSFET devices un-attractive except in topologies where the peak voltage stress is equal to the line voltage.

IGBT devices are available with blocking voltages of approximately 600 V and approximately 1200 V. Six hundred volts rated IGBTs are available in a single die with current ratings beyond 50A. Topologies using IGBT devices are ideally suited in this application.

## Claims

1. A power converter for providing a controllable output to a load for an AC or DC power supply comprising a resonant circuit (L1,L2,C1,C2) including switch means (S1,S2) and characterised in that it is capable of operating both in a first mode in which it delivers a controllable output voltage to a load which is higher than the input voltage, and a second mode in which it provides controlled attenuation of the input supply.

2. A power converter as claimed in claim 1 and for use with an AC power supply.

3. A circuit as claimed in claim 1 or claim 2 and comprising input and output terminals, a first rail interconnecting one input terminal to an output terminal and including a pair of serially connected inductors (L1,L2), a capacitor (C1) connecting the junction between the inductors to a second rail which interconnects the other input terminal to the other output terminal, an output capacitor (C2) interconnecting the output terminals, an input switch (S1) connected in the series between said one input terminal and said inductors, a second switch (S2) connected in parallel with the two capacitors, and means for controlling the switches so that the circuit can operate in a resonant manner.

4. A converter as claimed in claim 3 in which the switching cycle of the input switch in said first mode of operation is such that for a positive supply during the operational cycle the peak negative current in the inductor electrically nearest to the input supply is reduced when compared to normal resonant operation.

5. A converter as claimed in claim 4, wherein for a positive supply the input switch is closed at a point when the input supply is negative to reduce the amount of energy returned to the supply.

6. A converter as claimed in either claim 4 or claim 5, wherein each switch comprises a transistor and an associated diode.

7. A converter as claimed in claim 6, wherein each switch is bi-directional and comprises a pair of transistors (700,701,702,703) each having an associated diode (704,705,706,707).

8. A converter as claimed in any one of the preceding claims and incorporated in a dimmer unit for a light.

9. A method of converting an AC or DC power supply to provide a controllable output to a load comprising operating a resonant circuit so that the outward supply is at a higher voltage than the input.

10. A method as claimed in claim 9, wherein the converter comprises input and output terminals, a first rail interconnecting one input terminal to one output terminal and including a pair of serially connected inductors, a capacitor connecting the junction between the inductors to a second rail which interconnects the other input terminal to the other output terminal, an output capacitor interconnecting the output terminals, an input switch connected in series between said one input terminal and said inductor, a second switch connected in parallel with the two capacitors, and wherein the switches are controlled so that the converter operates in a resonant manner with the input switch being closed for a period during the operational cycle so as for a positive supply to reduce the peak negative current in the inductor electrically nearest to the input supply.

# FIG.1

CONTROL SIGNALS

CONTROL ELECTRONICS

## FIG.2

## FIG.3

I(L1) increases
$$\frac{dI(L1)}{dt} = \frac{Vin}{L1} \quad \text{--------} 1$$

I(L2) decreases
$$\frac{dI(L2)}{dt} = \frac{Vout}{L2} \quad \text{--------} 2$$

*FIG.4*

$$V(C1) \approx V_{in} (1 - \cos(\omega_0 t)) \text{ -------- } 3$$

$$I_R \approx \frac{V_{in}}{Z_0} \sin(\omega_0 t) \text{ ----------- } 4$$

$$I_R = \frac{V_{in}}{Z_0} \text{ ------------------ } 5$$

$$I(L1) = I(L2) + I_R \text{ ------------- } 6$$

$$\text{where } Z_0 = \sqrt{\frac{L1}{L2}} \text{ ------------------ } 7$$

$$\omega_0 = \frac{1}{\sqrt{L1\,C1}} \text{ ------------------ } 8$$

$$t = 0 \text{ when S2 opens}$$

*FIG.5*

$$I(L2) \text{ decays } \frac{dIL2}{dt} = \frac{V_{out}}{L2} \text{ ------- } 9$$

## FIG.6

$$\frac{dV(C1)}{dt} = \frac{I(L2)}{C1}$$

$$\frac{dI}{dt}(L2) = 0$$

S2 Closes when V(C1) = 0

# FIG.7

EP 0 631 372 A1

# FIG.8

EP 0 631 372 A1

# FIG.9

EP 0 631 372 A1

FIG.10

FIG.11

Time

Close 700   Close 702   Close 700   Close 702

Open 700   Open 700

Open 702   Open 702

Controlled delay

EP 0 631 372 A1

# FIG.12

EP 0 631 372 A1

# FIG. 13

# FIG.14

EP 0 631 372 A1

V(C1)
- 3V in
- 2V in
- V in
- 0

I(L2), I(L1)
- 3I(L2)
- 2I(L2)
- I(L2)
- I(L1)
- 0
- −I(L2)

→ Time

Open 701

Controlled delay

Pre-charge phase

701 open    Close 701

Close 701

## FIG.15

20V/
2µs/

-0

Buck-mode

## FIG.16

50V/
1µs/

-0

Boost-mode

## FIG.17

## FIG.18

## European Patent Office

## EUROPEAN SEARCH REPORT

Application Number

EP 94 30 4563

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 709 323 (LIEN) * column 4, line 64 - column 5, line 23; figure 2 * | 1,2,9 | H02M5/293 H02M3/158 |
| Y | PESC '93 RECORD, 20 June 1993, SEATTLE pages 1031 - 1037 RAY 'Constant frequency resonant topologies for bidirectional DC/DC power conversion' * the whole document * | 1-3 | |
| Y | IEEE TRANS. ON INDUSTRIAL ELECTRONICS, vol.38, no.4, 4 August 1991, NEW YORK pages 260 - 267 CHO 'Single-cycle resonant converters: a new group of quasi-resonant converters suitable for high-performance DC/DC and AC/AC conversion applications' * figure 3 * | 1-3 | |
| | | | TECHNICAL FIELDS SEARCHED (Int.Cl.5) H02M |

The present search report has been drawn up for all claims

| Place of search | Date of completion of the search | Examiner |
|---|---|---|
| THE HAGUE | 28 October 1994 | Gentili, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)